# EUROPÄISCHE PATENTSCHRIFT

(11) **EP 0 533 301 B1**
(45) Veröffentlichungstag und Bekanntmachung des Hinweises auf die Patenterteilung: **08.12.1999**
(21) Anmeldenummer: 92250241.4
(22) Anmeldetag: 02.09.1992
(51) Int. Cl.: G09F 13/18

(54) **Hinweisleuchte**
Advisory sign, illuminated from rear
Signe indicatrice illuminée par derrière

(30) Priorität: 03.09.1991 DE 4129266; 06.11.1991 DE 9113944 U; 20.02.1992 DE 4205136; 29.05.1992 DE 4217798; 12.06.1992 DE 4219294
(43) Veröffentlichungstag der Anmeldung: 24.03.1993
(73) Patentinhaber: DR. ING. WILLING GMBH, D-96110 Schesslitz (DE)
(72) Erfinder: Willing,Achim,Dr.-Ing., W-8604 Schesslitz (DE)
(74) Vertreter: Pfenning, Meinig & Partner

(56) Entgegenhaltungen:
- DE-A- 3 512 452
- DE-A- 3 941 231
- DE-U- 9 113 944
- PATENT ABSTRACTS OF JAPAN vol. 14, no. 572 (M-1061)19. Dezember 1990 & JP-A-2 247 901 ( MATSUSHITA ELECTRIC ) 3. Oktober 1990

## Beschreibung

Die Erfindung betrifft eine Hinweisleuchte nach dem Oberbegriff des Hauptanspruchs.

Bekannte Hinweisleuchten, die eine mit einem Piktogramm oder Hinweiselementen versehene leuchtende Fläche aufweisen, sind sandwichartig aufgebaut, d.h. die elektrischen Bauteile sind auf einer Platte aufgenommen, die von einer Abdeckhaube abgedeckt wird. Die Abdeckhaube ist üblicherweise opak und weist das oder die Piktogramme und die Hinweiselemente auf, wobei die Abstrahlfläche von innen beleuchtet wird. Aufgrund des genannten Aufbaus ist die Aufbauhöhe der Leuchte recht groß. Allerdings kann bei diesen Hinweisleuchten die in der Notbeleuchtung verlangte Mindestleuchtdichte über die gesamte Oberfläche und die geforderte Gleichmäßigkeit eingehalten werden. Um Hinweisleuchten auch unterhalb einer Lampe anordnen zu können, ist es bekannt, einen Hohlkörper mit einer offenen Seite, die zur Lampe hingerichtet ist, als Träger für die Piktogramme zu nutzen. Auch hier ist die Breite der Leuchte noch groß, wenn eine gleichmäßige Helligkeit auf den Seitenflächen des Hohlkörpers erzeugt werden soll.

Weiterhin ist es bekannt, zur Verringerung der Bautiefe eine Scheibe unterhalb der Lampe anzuordnen. Derartige Hinweisleuchten sind ohne besondere Maßnahmen auf ihrer Scheibenoberfläche dunkel, weil alles über eine im rechten Winkel zur Scheibenoberfläche stehende Scheibenkante eingespeistes Licht an der Scheibenoberfläche wegen der physikalischen Gesetze der Lichtbrechung an Grenzflächen total reflektiert wird und somit im Inneren der Scheiben bleibt bzw. an einer anderen Kante wieder austritt. Wenn allerdings die Scheibenoberfläche durch Gravieren oder Beschichtung mit einer lichtaufstreuenden Farbe mit den Hinweiselementen versehen wird, tritt an diesen Stellen das Licht aus. An den gravierten Stellen bildet sich die Leuchtdichte der Lampen ab und es ist möglich, über großflächige Scheiben hellstrahlende Zeichen darzustellen.

Diese bekannte Leuchte ist aber dann nicht zu verwenden, wenn die gesamte Scheibenfläche leuchten soll. Diese Forderung besteht in der Notbeleuchtung, bei der hohe Anforderungen an Gleichmäßigkeit und Leuchtdichte gestellt werden. Hohe Ungleichmäßigkeiten entstehen, wenn die gesamte oder ein großer Teil der Fläche mit Hinweiselementen versehen ist, so daß die nicht total reflektierenden Flächen in Lampennähe bereits den größten Anteil des Lichts in den Außenraum reflektieren. Besonders kritisch werden die Ausführungen der Hinweisleuchte mit den Scheiben, wenn sie nicht nur über ihre gesamte Fläche in eine Richtung abstrahlen soll, sondern beidseitig. Ein weiterer Nachteil der beschriebenen Scheibenleuchte ist es, daß sie nicht geeignet ist, über die Beleuchtung der Piktogramme hinaus auch die Wege vor dem Piktogramm zu beleuchten.

Aus der DE 35 12 452 A1 ist eine Notleuchte bekannt, die einen als durchsichtigen Massivkörper ausgebildeten Leuchtenkörper aufweist. Der Massivkörper besitzt eine Lichteintriffsfläche, von der aus er sich in von ihr wegführender Richtung verjüngt. Auf dem Massivkörper ist ein zumindest teilweise transparenter Belag optisch dicht aufgebracht, der mindestens ein Rettungszeichen aufweist und durch den die auftreffenden Lichtstrahlen nur zum Teil total reflektiert werden. Eine solche Leuchte ist aufgrund der vorgegebenen Form aufwendig in ihrer Herstellung, und es wird durch den Belag Licht absorbiert.

Die DE 39 41 231 beschreibt eine Einrichtung zur Darbietung von Informationen, Anzeigen, Hinweisen und dergleichen, die einen plattenförmigen Körper aus durchsichtigem Material aufweist, an dessen Stirnkante eine Lichtquelle angeordnet ist. Auf der vom Betrachter abgewandten Hinterfläche sind optisch dicht Symbole angebracht, die von vorn durch den durchsichtigen Körper hindurch sichtbar sind. Vor der dem Betrachter zugewandten Vorderfläche ist unter Zwischenschaltung eines Mediums mit geringerer Brechzahl als die des Körpers eine Kunststoffolie mit jalousie- oder rasterförmig angeordneten Mikrolamellen angebracht, die dazu dient, die Blickwinkel einzuengen.

Die JP-A-22 47 901 beschreibt eine Hinweisleuchte, bei der zwischen Lichtverteilungskörper und Hinweiskörper eine Platte liegt, wobei ein Teil des in die Platte eingespeisten Lichts unten an der Stirnfläche der Platte wieder austritt.

Der Erfindung liegt die Aufgabe zugrunde, eine Hinweisleuchte zu schaffen, die eine geringe Bautiefe aufweist und über die gesamte Fläche Licht mit hoher Leuchtdichte bei gleichmäßiger Leuchtdichteverteilung (ohne Hinweiselemente) abstrahlt, wobei sie neben der Hinterleuchtung der Hinweiselemente einen möglichst wirksamen Anteil zur Wege- und Indirektbeleuchtung bereitstellt.

Diese Aufgabe wird erfindungsgemäß durch die kennzeichnenden Merkmale des Hauptanspruchs in Verbindung mit den Merkmalen des Oberbegriffs gelöst.

Der Lichtverteilungskörper der Hinweisleuchte ist erfindungsgemäß scheibenförmig mit parallelen oder in kleinem Winkel zueinander stehenden Seitenflächen ausgebildet, wobei mindestens ein großer Teil einer Seitenfläche die Abstrahlfläche bildet, der Hinweiselemente zugeordnet sind. Die Abstrahlfläche und/oder die dieser entgegengesetzte Fläche weist ganz- oder teilflächig eine zumindest teilweise diffus reflektierende, die Totalreflexion unterbrechende Beschichtung, Kaschierung, Aufrauhung oder Struktur zur Hinterleuchtung der Hinweiselemente auf, wobei durch Vorsehen von einem oder mehreren Reflektoren, die das von der Strahlungsquelle abgestrahlte Licht in den Lichtverteilungskörper hinein bündeln, und wobei die Optik derart ausgebildet sein kann, daß sie nur in Ebenen quer zum Lichtverteilungskörper oder auch in Ebenen quer und parallel zum Lichtverteilungskörper bündeln, wodurch erreicht wird, daß im lampennahen Bereich des Lichtverteilungskörpers wesentlich weniger Lichtstrom durch das Material aufgefangen und reflektiert bzw. transmittiert wird. Dies trägt stark zur Erreichung einer hohen Gleichmäßigkeit der Abstrahlung und wegen der weniger häufigen Reflexionen zu einer Erhöhung der mittleren Leuchtdichte bei. Das von dem Reflektor reflektierte, nicht auf die Lichteintrittsfläche auftreffende Lampenlicht tritt durch unmittelbar am Reflektor angeordnete Lichtaustrittsöffnungen aus und es kann gleichzeitig eine Wege- und/oder Indirektbeleuchtung erzielt werden, so daß Fluchtwege oder dergleichen beleuchtet werden können. Dabei wird die Gleichmäßigkeit der Ausleuchtung nicht beeinträchtigt.

Es kann sowohl eine einseitig abstrahlende Hinweisleuchte als auch eine beidseitig abstrahlende Hinweisleuchte realisiert werden, wobei vorzugsweise bei einer einseitig abstrahlenden Hinweisleuchte die der Abstrahlfläche entgegengesetzte Fläche im wesentlichen vollständig reflektiert, während bei einer zweiseitig abstrahlenden Leuchte die jeweilige die Totalreflexion unterbrechende Beschichtung, Kaschierung, Aufrauhung oder Struktur teilweise reflektierend und teilweise transmittierend und nicht absorbierend ausgebildet ist, wodurch beide Seiten mit Leuchtdichte belegt werden können.

Durch die in den Unteransprüchen angegebenen Maßnahmen sind vorteilhafte Weiterbildungen und Verbesserungen möglich.

Ausführungsbeispiele der Erfindung sind in der Zeichnung dargestellt und werden in der nachfolgenden Beschreibung näher erläutert. Es zeigen:
- Fig. 1: ein prinzipielles den Aufbau einer Hinweisleuchte erläuterndes Ausführungsbeispiel in perspektivischer Ansicht als Beispiel einer zweiseitig abstrahlenden Hinweisleuchte mit Hinweiselementen,
- Fig. 2: ein Notleuchten-Piktogramm, das bei einer Leuchte nach Fig. 1 als abstrahlende Fläche mit Hinweiselementen dienen kann,
- Fig. 3: eine Ansicht auf ein Ausführungsbeispiel einer erfindungsgemäßen Leuchte für die Wegebeleuchtung,
- Fig. 4: eine Teilansicht eines weiteren Ausführungsbeispiel einer erfindungsgemäßen Leuchte mit Reflektor, wobei neben dem Lichtleitkörper Prismenscheiben angebracht sind, die zur Wegebeleuchtung dienen und in die Ausleuchtung durch den Reflektor mit einbezogen sind,
- Fig. 5: eine Seitenaufsicht auf ein weiteres Ausführungsbeispiel einer erfindungsgemäßen Hinweisleuchte mit besonders ausgeführtem Reflektor für die Wegebeleuchtung,
- Fig. 6: eine Teilansicht auf ein weiteres Ausführungsbeispiel einer erfindungsgemäßen Leuchte mit Reflektor, mit einer Ausleuchtung der Scheibenkante und einem breitstrahlenden Zusatzreflektor für die Wegebeleuchtung oder Indirektbeleuchtung,
- Fig. 7: eine zweiseitig abstrahlende Leuchte im Schnitt quer zum Lichtverteilungskörper,
- Fig. 8: eine einseitig abstrahlende Leuchte im Schnitt quer zum Lichtverteilungskörper mit einer optisch getrennt aufgebrachten Scheibe,
- Fig. 9: eine zweiseitig abstrahlende Leuchte im Schnitt quer zum Lichtverteilungskörper mit Abschlußscheiben in Keilform,
- Fig. 10: eine zweiseitig abstrahlende Leuchte im Schnitt quer zum Lichtverteilungskörper mit beidseitig auf den Lichtverteilungskörper aufgebrachter teilweise reflektierender, teilweise transmittierender Beschichtung, Aufrauhung oder Struktur und mit optisch getrennten Abschlußscheiben,
- Fig. 11: eine einseitig abstrahlende Leuchte im Schnitt quer zum Lichtverteilungskörper mit beidseitiger, teilweise reflektierender, teilweise transmittierender Beschichtung, Aufrauhung oder Struktur und mit einer lichtundurchlässigen und einer lichtdurchlässigen vom Lichtverteilungskörper optisch getrennter Scheibe,
- Fig. 12: eine einseitig abstrahlende Leuchte im Schnitt quer zum Lichtverteilungskörper mit einer teilweise reflektierenden, teilweise transmittierenden Beschichtung, Aufrauhung oder Struktur und einer lichtundurchlässigen zum Lichtverteilungskörper optisch dichten Beschichtung und einer vor der Abstrahlfläche liegenden optisch getrennten lichtdurchlässigen Scheibe,
- Fig. 13: Beispiele eines Lichtverteilungskörpers mit einseitiger und zweiseitiger, die Totalreflexion teilweise unterbrechende, teils reflektierende, teils transmittierende Beschichtung, Aufrauhung oder Struktur mit je nach gewünschter Leuchtdichteverteilung ungleichmäßigem Verlauf über die Scheibenoberfläche,
- Fig. 14: eine Leuchte im Schnitt quer zum Lichtverteilungskörper mit einer teilweise diffus beschichteten Fläche, wobei die beschichteten Flächenanteile zum lampenfernen Ende zunehmen,
- Fig. 15: eine Leuchte nach Fig. 14 in Aufsicht mit den teilweise freigelassenen Flächen,
- Fig. 16: eine Hinweisleuchte mit einer Abschlußscheibe als Träger von Hinweiselementen, wobei der Träger auswechselbar ist, und
- Fig. 17: eine Seitenaufsicht auf eine Hinweisleuchte mit Reflektor.

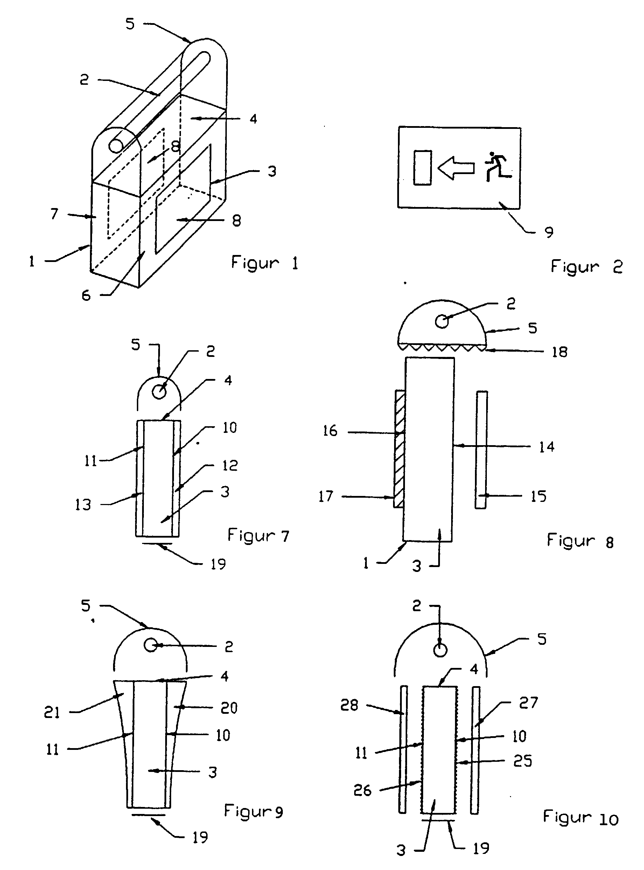

In den Figuren 1, 2, 7-17 sind Beispiele genannt die nicht zur Erfindung gehören aber zum Verständnis der Erfindung dienen.

Die in Fig. 1 dargestellte Leuchte 1 besteht aus einer Lampe 2, die oberhalb der Längskante 4 eines Lichtverteilungskörpers 3 angeordnet ist, und aus einer lichtbündelnden Optik, die als Reflektor 5 ausgebildet ist. Der Lichtverteilungskörper 3 ist als rechteckförmige Lichtleitscheibe aus nichtstreuendem klartranspartem Material ausgebildet, wobei die Durchleuchtung der Hinweiselemente 8 auf den zwei sich gegenüberliegenden Abstrahlflächen 6 und 7 durch eine Ausbildung der Seitenflächen erreicht wird. Bei der Ausführung als Notleuchte ist die Abstrahlfläche mit den Hinweiselementen beispielsweise als Piktogramm 9 entsprechend Fig. 2 ausgebildet.

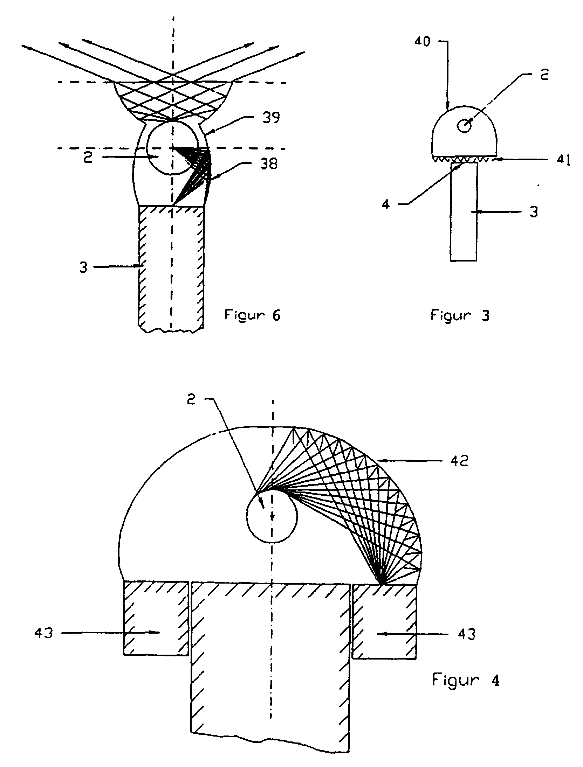

In den Fign. 3 bis 6 sind erfindungsgemäße Ausführungsbeispiele dargestellt, bei denen zusätzlich zur Ausleuchtung der Piktogramme eine Indirekt- oder Wegebeleuchtung abgeleitet wird. Dies geschieht zweckmäßigerweise mit dem Anteil des Lampenlichts, der ohnehin nur begrenzt und überhaupt nicht in die Lichtleitscheibe eingespeist wird.

Je nach Ziel richtung und Verwendung der Leuchte sowie Art und Anzahl der Lampen können die Reflektoren unterschiedlich ausgebildet sein. Beispielsweise können Lampe und Reflektor symmetrisch zur Mittellinie der Lichtleitscheibe oder die Lampe symmetrisch, der Reflektor unsymmetrisch oder die Lampe unsymmetrisch über die Lichteintrittsfläche angeordnet sein, wobei im letzteren Fall für jede Reflektorhälfte sich unterschiedliche Bildungsvorschriften ergeben. Die Reflektoren können als durchgehender Reflektor ausgebildet sein oder aus mehreren Reflektorelementen bestehen, wobei auch Sprungstellen vorgesehen werden können.

In Fig. 3 ist ein als Dachreflektor mit Seitenreflektoren ausgebildeter Reflektor 40 vorgesehen, dessen Lichtaustrittsfläche mit einer Prismenscheibe 41 abgedeckt ist, wobei das zur Wegebleuchtung benötigte Licht seitlich neben der Lichteintrittsfläche 4 der Lichtleitscheibe 3 austritt, da die lichte Weite des Reflektors 40 breiter ist als die Lichteintrittsfläche der Lichtleitscheibe 3.

Der Reflektor 42 nach Fig. 4 besitzt eine Lichtaustrittsfläche, die größer ist als die Lichteintrittsfläche 4 der Lichtleitscheibe, so daß die verbleibenden Flächen durch Prismenstreifen 43 abgedeckt werden können, die mit der Lichtleitscheibe verbunden sind, oder die Bestandteil der Lichtleitscheibe sein können. Durch innere Reflexion wird eine verlustarme Wegebeleuchtung realisiert. Mit modifizierter Wirkung funktioniert dieses Prinzip aber auch unter Weglassung der Prismenstreifen.

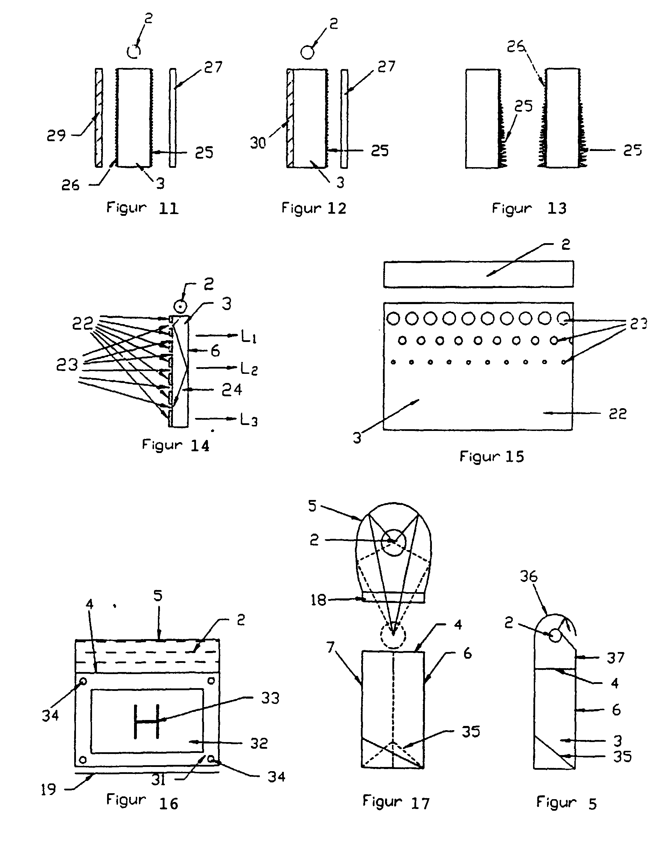

Fig. 5 zeigt eine Möglichkeit, bei der ein Dachreflektor 36 mit seitlicher Öffnung vorgesehen ist, der zur Wegebeleuchtung bei einer einseitig abstrahlenden Leuchte verwendet wird. Das von der Lampe 2 ausgesandte Licht wird an der gekrümmten Fläche des Dachreflektors 36 reflektiert und tritt seitlich durch die Öffnung aus. Um Blendung zu vermeiden, ist ein Seitenreflektor 37 vorgesehen. Bei dieser Anordnung gelangt kein Lichtstrahl nach unten, d.h. parallel zur Scheibe. Wenn der Reflektor verbreitert wird, derart, daß er über die Lichtleitscheibe übersteht, wird dieser Nachteil behoben. Es ist ein schräg angeordneter Reflektor 35 an der der Lichteintrittsfläche gegenüberliegenden Seite vorgesehen. Bei einer nicht dargestellten zweiseitig abstrahlenden Leuchte ist oberhalb der Lampe 2 ein zweiseitig gekrümmter Dachreflektor angeordnet, so daß die nach oben austretende Strahlung nach zwei Seiten reflektiert wird.

In Fig. 6 ist eine Reflektoranordnung dargestellt, bei der ein erster Reflektor 38 die Lichteintrittskante 4 vollständig ausleuchtet und bei der oberhalb bzw. der unterhalb der Lampe 2 an der von der Lichteintrittskante 4 abgewandten Seite der Lampe 2 ein weiterer Reflektor 39 mit breitstrahlender Ausstrahlungscharakteristik vorgesehen ist. Dieser Reflektor 39 dient zur Indirekt- oder Wegebeleuchtung. Dabei kann der Reflektor 39 auch mit einer Prismenscheibe zur Begrenzung der Direktblendung abgedeckt sein.

Merkmale der folgenden Ausführungsformen können in Zusammenhang mit der Indirekt- und Wegebeleuchtung nach Fign. 3 bis 6 verwendet werden.

In Fig. 7 ist die Lichtleitscheibe 3 mit ihren beiden Seitenflächen 10, 11 ganzflächig mit einer opaken Scheibe 12, 13, die die Abstrahlflächen 6, 7 bilden, kaschiert. Die Scheiben 12, 13 sind optisch dicht, also ohne Abstand zu der Oberfläche der Lichtleitscheibe 3 angeordnet. Die Scheiben 12, 13 sind beispielsweise mit der Lichtleitscheibe 3 mit einem Kleber gleichen Grundmaterials wie die Lichtleitscheibe und die Scheiben 12, 13 verklebt. Es ist auch möglich, eine transparente nicht absorbierende Klebefolie als Zwischenträger vorzusehen. Die Scheibendicke der Scheiben 12, 13 kann zwischen mehreren Millimetern und wenigen zehntel Millimetern schwanken, je nach Materialauswahl und Fertigungstechnik. Die opaken Scheiben 12, 13 bestehen aus einem Material, zum Beispiel PMMA, das die Eigenschaft hat, Licht zu transmittieren und zu reflektieren, jedoch kaum zu absorbieren. Dadurch wird das durch die Lampe 2 über die Lichteintrittsfläche bzw. -kante 4 eingestrahlte Licht mit nur geringen Verlusten im Lichtleitkörper verteilt und führt je nach Dicke und Geoemetrie des Lichtleitkörpers zu einer mehr oder weniger gleichmäßigen Ausleuchtung der Lichtaustrittsflächen.

Die Scheiben 12, 13 tragen die Piktogramme oder Hinweiselemente, die eingraviert, beschichtet oder mittels einer Folie aufgebracht werden können.

Anstelle der Scheiben 12, 13 zur Kaschierung können Beschichtungen durch Siebdruck oder Aufspritzen oder dergleichen aufgebracht werden, wobei die Beschichtung aus pigmentiertem Material, aus geschäumtem Material oder aus fluoreszierendem Material hergestellt werden kann.

In Fig. 8 ist eine Hinweisleuchte 1 dargestellt, bei der die Lichtleitscheibe 3 eine glatte klare Grenzfläche aufweist, der ein Hinweisträger 15 aus klartransparentem oder opakem, teils reflektierendem und teils transmittierendem Material zugewandt ist, wobei zwischen Lichtleitscheibe 3 und Hinweisträger 15 sich ein Abstand befindet, so daß der Hinweisträger 15 optisch getrennt von der Grenzfläche 14 angeordnet ist. Die der Grenzfläche 14 gegenüberliegende Grenzfläche 16 weist eine diffuse im wesentlichen vollständig reflektierende Beschichtung oder Aufrauhung 17 auf, die bei entsprechender Scheibendicke eine gute Lichtverteilung in der Lichtleitscheibe 3 bewirkt. Der Reflektor 5, der die Lampe 2 umhüllt und eine Bündelung des abgestrahlten Lichts quer zur Lichtleitscheibe 3 bündelt, übergreift die gesamte Anordnung. Zusätzlich zum Reflektor 5 ist als lichtbündelnde Optik eine Prismenscheibe 18 vorgesehen, die eine Bündelung der Strahlen sowohl in Ebenen quer als auch parallel zur Lichtleitscheibe 3 bewirkt und die den Reflektor 5 abdeckt. Anstelle der Prismenscheibe 18 kann beispielsweise auch ein Lamellenraster mit parabolisch geformten Lamellen ausgebildet sein, wobei vorzugsweise der Reflektor 5 dann als Parabolreflektor ausgebildet ist. Dabei bewirkt das Lamellenraster eine Bündelung in Ebenen parallel zur abstrahlenden Fläche 6 der Lichtleitscheibe 3, während das Licht durch den die Lampe 2 umfassenden parabolisch geformten Reflektor 5 in Ebenen quer zur abstrahlenden Fläche 6 oder auch quer zur Lampenachse gebündelt wird. Anstelle des Lamellenrasters kann auch eine Prismenscheibe mit Streifenprismen quer zur Lampenachse verwendet werden. Besonders günstig sind Streifen mit einem Prismenwinkel von 30°. Die Anwendung des Lichtleitkörpers nach Fig. 8 kann spiegelsymmetrisch zur Abschlußfläche der Beschichtung oder Aufrauhung 17 verdoppelt werden, wobei ein zweiseitig abstrahlender Lichtleitkörper entsteht, in den mit nur einer Lampe eingespeist wird. Diese Möglichkeit ist für alle einseitig abstrahlenden Ausführungsformen gegeben.

In Fig. 9 ist wiederum eine zweiseitig abstrahlende Leuchte 1 dargestellt, jedoch kaschiert mit opaken lichtdurchlässigen Scheiben oder Beschichtungen 20, 21, die ebenfalls optisch dicht auf die Lichtleitplatte 3 aufgebracht sind, aber im Bereich der Lichteintrittsfläche 4 dicker, nämlich keilförmig ausgeführt sind. Dieses Scheiben- bzw. Beschichtungsprofil sorgt für eine höhere Gleichmäßigkeit der Lichtabstrahlung, da der Transmissionsgrad im lampennahen Bereich größer ist. Selbstverständlich können die Scheiben 20, 21 auch andere Profile aufweisen oder das Profil kann ersetzt werden durch eine unterschiedlich starke Einfärbung der Beschichtung bzw. Scheibe. In den Leuchten nach Fig. 7 und Fig. 9 ist gegenüber der Lichteintrittsfläche 4 ein Reflektor 19 angeordnet, der das durch diese Kante austretende Licht in die Lichtleitscheibe 3 zurückreflektiert, so daß die in der Lichtleitscheibe 3 gehaltene Lichtmenge vergrößert wird.

Eine unterschiedliche Lichtverteilung über die Abstrahloberfläche kann auch in anderer Weise erzielt werden, beispielsweise nach Fig. 14 und 15. In diesem Beispiel ist die der Abstrahlfläche 6 entgegengesetzte Fläche mit einer Beschichtung 22 versehen, bei der Teilflächen 23 freigelassen sind. Die freigelassenen Teilflächen 23 bewirken, wie am Beispiel des Lichtstrahls 24 erkennbar, daß die auf die freigelassenen Teilflächen 23 auftreffenden Strahlen weiter von der Lampe 2 weg transportiert werden und so die lampenfernen Leuchtdichten L2 und L3 vergrößern. Der Anteil der freigelassenen Flächen, die beliebige Formen haben können und im Ausführungsbeispiel kreisförmig ausgebildet sind, nimmt mit größerer Entfernung zur Lampe 2 ab, wobei aber auch andere Verteilungen möglich sind. Vorteilhaft ist es, die freigelassenen Teilflächen 23 so klein auszuführen, daß sie für das Auge aus einer gegebenen Mindestentfernung von zum Beispiel 0,5 bis 1 m nicht mehr sichtbar sind. Ein ähnlicher Effekt kann durch unterschiedliche Aufrauhung bzw. Strukturierung der Seitenflächen des Lichtleitkörpers gemäß Fig. 11 erreicht werden.

In den Fign. 10 bis 12 sind weitere Hinweisleuchten dargestellt, die einen ähnlichen Aufbau wie die vorhergehenden aufweisen. In Fig. 10, die eine zweiseitig abstrahlende Leuchte zeigt, ist die Lichtleitscheibe 3 auf beiden Seiten 10, 11 mit einer die Totalreflexion teilweise unterbrechenden, das Licht mindestens teilweise reflektierenden, teilweise transmittierenden Beschichtung, Aufrauhung oder Struktur 25, 26 versehen, ähnlich der Beschichtung bzw. den Scheiben 12, 13 nach Fig. 7. Die dargestellte beidseitige Beschichtung, Aufrauhung oder Struktur kann auch auf eine Seite beschränkt werden, dann allerdings können beide Seiten mit unterschiedlicher Leuchtdichte strahlen. Das von der Lichtleitscheibe 3 abgestrahlte Licht wird durch die beiden opaken und klartransparenten Scheiben 27, 28 gesammelt, die beispielsweise die Hinweiselemente tragen. Durch die Scheiben 27, 28 wird eine eventuell sichtbare Feinstruktur der Beschichtung 25, 26, Aufrauhung oder Struktur vergleichmäßigt. Fig. 11 zeigt die gleiche Leuchte wie Fig. 10, jedoch mit einer lichtundurchlässigen Abdeckscheibe 29, so daß eine einseitig abstrahlende Leuchte entsteht.

Fig. 12 zeigt eine einseitig abstrahlende Leuchte entsprechend Fig. 11, jedoch mit einer lichtundurchlässigen Scheibe, Beschichtung oder Aufrauhung 30, die direkt, d.h. optisch dicht auf der Lichtleitscheibe 3 angebracht ist. Die Beschichtung, Strukturierung und Aufrauhung 25 sorgt für eine Verbesserung der Gleichmäßigkeit der Leuchtdichteverteilung.

In Fig. 13 sind im Querschnitt Beispiele einer Lichtleitscheibe 3 mit einseitig oder zweiseitiger, die Totalreflexion teilweise unterbrechende, teilweise reflektierende, teils transmittierende Beschichtung, Aufrauhung oder Struktur mit je nach gewünschter Leuchtdichteverteilung ungleichmäßigem Verlauf über die Scheibenoberfläche dargestellt, wodurch sie unterschiedliche Grade der Reflexion bzw. Transmission aufweisen.

Fig. 16 zeigt eine einseitig oder zweiseitig abstrahlende Leuchte, bei der optisch getrennt ein Piktogrammträger 31 mit Piktogramm 32 und Hinweiselement 33 vorgesehen sind. In der Lichtleitscheibe befinden sich Sacklöcher, in die Zylinderstifte 34 mit angeformtem Kopf durch dafür vorgesehene Bohrungen in den Piktogrammträger 31 eingreifen. Auf diese Weise ist der Piktogrammträger 31 leicht auswechselbar.

Bei den beschriebenen Leuchten können die Hinweiselemente zwischen Grenzflächen der Lichtleitscheibe und Beschichtung bzw. Abdeckscheiben oder auch auf der Beschichtung bzw. Abdeckscheibe angeordnet sein. Wesentlich ist, daß die Hinweiselemente durch die die Totalreflexion unterbrechende Beschichtung hinterleuchtet werden. Beispielsweise ist bei einer zweiseitig abstrahlenden Leuchte eine Anordnung denkbar, bei der die Hinweiselemente optisch dicht mit der Lichtleitscheibe verbunden sind und eine durchgehende Abschlußfläche bzw. Abschlußscheibe vorgesehen ist, die nur im Bereich der Hinweiselemente gleichfalls optisch dicht mit der Lichtleitscheibe verbunden ist. Dadurch wird erreicht, daß die Hinweiselemente ausschließlich bei eingeschalteter Lampe 2 erkennbar werden.

In Fig. 17 ist eine Leuchte dargestellt, bei dem die lichtbündelnde Optik mit Abstand zur Lichteintrittsfläche 4 angeordnet ist. Dabei ist der Reflektor 5 elliptisch ausgebildet, wobei in dem einen Brennpunkt die Lampe 2 angeordnet ist und der andere Brennpunkt in der Nähe oder auf der Lichteintrittsfläche 4 der Lichtleitscheibe 3 liegt. Die Lichtaustrittsfläche des Reflektors 5 ist wieder mit einer Prismenscheibe 18 mit Streifenprismen oder anderen Prismen abgeschlossen.

Wie aus Fig. 17 zu erkennen ist, ist an der der Lichteintrittsfläche 4 gegenüberliegenden Seite der Lichtleitscheibe ein dachförmiger Reflektor 35 angeordnet. Dieser Reflektor 35 dient dazu, den lampenfernen Bereich der Lichtleitscheibe 3 besonders stark aufzuhellen, wobei die Realisierung dieses Reflektors durch entsprechende Einschnitte in der Lichtleitscheibe 3 denkbar ist. Bei zwei Abstrahlflächen 6, 7 ist der Reflektor 35 dachförmig ausgebildet, während bei nur einer Abstrahlfläche 6 der Reflektor, wie durch die gestrichelten Linien angedeutet, schräg ist. Selbstverständlich kann der dachförmige Reflektor 35 auch eine umgekehrte Form haben, d.h. einen V-förmigen Querschnitt aufweisen. Durch den Reflektor 35 wird die Gleichmäßigkeit der Leuchtdichte auf der abstrahlenden Fläche 6 erhöht.

In den beschriebenen Leuchten werden vorzugsweise Leuchtstofflampen als Strahlungsquelle verwendet. Selbstverständlich können andere Lichtquellen oder mehrere Leuchtstofflampen verwendet werden. Als Lichtquellen können eine oder mehrere punktförmige Glühlampen, ein oder mehrere Enden von Lichtleitern oder eine oder mehrere Leuchtdioden angewandt werden. Dabei hängen die oben beschriebenen lichtbündelnden Systeme von der Art der Lampe ab. Für punktförmige Lichtquellen, zum Beispiel Niedervolt-Halogenglühlampen oder Leuchtdioden, können diesbekannte lichtbündelnde, zum Beispiel parabolähnliche Reflektorsysteme oder Linsensysteme sein. Diese können entsprechend der Lichtverteilungsgeometrie unsymmetrisch sein, vorteilhaft ist es aber auch, mehrere Lichtquellen mit rotationssymmetrischer Bündelung zu verwenden. Bei Lichtquellen verschiedener Lichtfarbe kann die Verwendung mehrerer sich überlagernder Lichtquellen zur Darstellung weißen Lichts, zum Beispiel bei Dioden genutzt werden. In den beschriebenen Ausführungsbeispielen wurden rechteckige Lichtleitscheiben angewandt, selbstverständlich sind auch andere Formen denkbar.

Die elektrischen Teile einschließlich Lampe können einseitig oder in einem Rahmen um die Leuchte herum angeordnet sein. Im letzteren Beispiel bietet sich auf einfache Weise eine Wegebeleuchtung durch eine freigelassene Lichtaustrittsöffnung an. Auch kann eine Einheit von Lichtverteilungskörper und Lampe(n) geschaffen werden, wobei die elektrischen bzw. elektronischen Zubehörteile getrennt davon, zum Beispiel bei Deckeneinbauleuchten in der Decke angeordnet sind.

## Patentansprüche

1. Hinweisleuchte mit mindestens einer Strahlungsquelle und einem Lichtverteilungskörper, dem im Bereich mindestens einer Abstrahlfläche Hinweiselemente zugeordnet sind und der mindestens eine Lichteintrittsfläche aufweist, wobei mindestens die der Abstrahlfläche (6) entgegengesetzte Fläche (7) ganzflächig oder teilflächig eine zumindest teilweise reflektierende, die Totalreflexion unterbrechende Beschichtung, Kaschierung, Aufrauhung oder Struktur (11,12) zur Verbesserung der Lichtverteilung im Lichtverteilungskörper und zur Hinterleuchtung der Hinweiselemente aufweist, und die mindestens eine Strahlungsquelle außerhalb des Lichtverteilungskörpers im Bereich der Lichteintrittsfläche angeordnet ist,
dadurch **gekennzeichnet,**
daß der Lichtverteilungskörper (3) scheibenförmig ausgebildet ist und daß ein durchgehender oder aus mehreren Reflektorelementen bestehender Reflektor mit hochglänzender glatter oder leicht strukturierter Oberfläche zur Einstrahlung in die Lichteintritts fläche (4) und Bündelung des Lichtes quer zum Lichtverteilungskörper (3) die Strahlungsquelle (2) teilweise umgibt, dessen nicht in die Lichteintrittsfläche des Lichtverteilungskörpers (3) gelangendes Licht durch unmittelbar in Reflektornähe angeordnete Lichtaustrittsöffnungen austritt und zur Wegebeleuchtung oder Raumaufhellung genutzt wird.

2. Hinweisleuchte nach Anspruch 1,
dadurch gekennzeichnet, daß der Reflektor (36,39,40,42) derart ausgebildet und/oder angeordnet ist, daß ein Teil des gebündelten Lichtes an dem Lichtverteilungskörper (3) zur Wege- oder Indirektbeleuchtung vorbeigelenkt wird.

3. Hinweisleuchte nach Anspruch 1 oder 2,
dadurch gekennzeichnet, daß zur Wege- oder Indirektbeleuchtung der Lichtverteilungskörper (3) in dem Bereich seiner Lichteintrittsfläche (4) mit seitlich angeordneten streifenförmigen Elementen (43) aus transparentem Material versehen ist, die von dem nicht auf die Lichteintrittsfläche (4) des Lichtverteilungskörpers (3) gerichteten Licht durchstrahlt werden.

4. Hinweisleuchte nach Anspruch 1,
dadurch gekennzeichnet, daß der Reflektor (38,39) derart ausgebildet ist, daß ein Teil des Lichtes, das von der Strahlungsquelle in die zur Lichteintrittsfläche des Lichtverteilungskörpers entgegengesetzte Richtung abgestrahlt wird, nach außen zur Wege- und Indirektbeleuchtung gelangt.

## Claims

1. Advisory sign having at least one radiation source and a light-distributing body, with which body advisory elements are associated in the region of at least one radiating surface and which has at least one light-entry surface, at least the surface (7) opposite the radiating surface (6) having, over its entire area or a portion of its area, an at least partially reflective coating, cladding or structure (11,12) interrupting the total reflexion in order to improve the light distribution in the light-distributing body and to illuminate the advisory elements from behind, and the at least one radiation source being arranged outside the light-distributing body in the region of the light-entry surface,
**characterised in that**
the light-distributing body (3) is configured in the shape of a disc and in that a continuous reflector, consisting of a plurality of reflector elements, partially surrounds the light source with a high-gloss smooth or slightly structured surface to radiate into the light-entry surface (4) and to focus the light transversely to the light-distributing body (3), the light of which reflector, not reaching the light-entry surface of the light-distributing body (3), emerges through light-exit apertures arranged in the immediate proximity of the reflector and is used to illuminate roads or to brighten a space.

2. Advisory sign according to claim 1,
**characterised in that** the reflector (36,39,40,42) is configured and/or arranged in such a way that a portion of the focused light is deflected past the light-distributing body (3) for road or indirect illumination.

3. Advisory sign according to claim 1 or 2,
**characterised in that,** for road or indirect illumination, the light-distributing body (3) is provided in the region of its light-entry surface (3) with strip-shaped elements (43) made of transparent material and arranged at the side, through which light not directed on the light-entry surface (4) of the light-distributing body (3) penetrates.

4. Advisory sign according to claim 1,
**characterised in that** the reflector (38, 39) is configured in such a way that a portion of the light which is radiated from the radiation source in the opposite direction from the light-entry surface of the light-distributing body reaches the outside for road and indirect illumination.

## Revendications

1. Indicateur lumineux comprenant au moins une source de rayonnement et un corps de distribution de la lumière auquel des éléments indicateurs sont associés dans la région d'au moins une surface de sortie du rayonnement, et qui présente au moins une surface d'entrée de la lumière, au moins la surface (7) qui est à l'opposé de la surface (6) de sortie du rayonnement présentant, sur toute sa superficie ou sur une partie de sa superficie, un revêtement, placage, dépolissage, ou structure (11,12) au moins partiellement réfléchissant, qui arrête la réflexion totale et est destiné à améliorer la distribution de la lumière dans le corps de distribution de la lumière et à éclairer les éléments indicateurs par l'arrière, et ladite au moins une source de rayonnement est disposée à l'extérieur du corps de distribution de la lumière, dans la région de la surface d'entrée de la lumière,
caractérisé en ce que le corps (3) de distribution de la lumière est en forme de plaque et en ce qu'un réflecteur ininterrompu ou composé de plusieurs éléments réflecteurs, qui possède une surface lisse très brillante ou légèrement structurée pour assurer l'introduction du rayonnement dans la surface (4) d'entrée de la lumière et la concentration de la lumière, entoure partiellement la source de rayonnement (2) transversalement au corps (3) de distribution de la lumière, la lumière de ce réflecteur qui ne pénètre pas dans la surface d'entrée de la lumière du corps (3) de distribution de la lumière, sortant à travers des ouvertures de sortie de la lumière disposées dans le voisinage immédiat du réflecteur et étant utilisée pour l'éclairage d'un passage ou l'éclairage d'une pièce.

2. Indicateur lumineux selon la revendication 1,
caractérisé en ce que le réflecteur (36, 39, 40, 42) est configuré et/ou disposé de manière qu'une partie de la lumière concentrée soit déviée pour passer le long du corps (3) de distribution de la lumière pour l'éclairage d'un passage et/ou pour l'éclairage indirect.

3. Indicateur lumineux selon la revendication 1 ou 2,
caractérisé en ce que, pour que l'éclairage d'un passage ou l'éclairage indirect, le corps (3) de distribution de la lumière est muni, au voisinage de sa surface (4) d'entrée de la lumière, d'éléments (43) en matière transparente, en forme de bande, disposés latéralement, qui ne sont pas traversés par la lumière projetée sur la surface (4) d'entrée de la lumière du corps (3) de distribution de la lumière.

4. Indicateur lumineux selon la revendication 1,
caractérisé en ce que le réflecteur (38, 39) est configuré de manière qu'une partie de la lumière qui est projetée par la source de rayonnement à l'opposé de la surface d'entrée de la lumière du corps de distribution de la lumière parvient à l'extérieur pour l'éclairage d'un passage et/ou l'éclairage indirect.
